# EUROPÄISCHE PATENTSCHRIFT

(11) **EP 0 676 905 B1**
(45) Veröffentlichungstag und Bekanntmachung des Hinweises auf die Patenterteilung: **10.09.2003**
(21) Anmeldenummer: 95104886.7
(22) Anmeldetag: 01.04.1995
(51) Int. Cl.: H04Q 3/76, H04Q 3/00, H04Q 3/62

(54) **Verfahren für den Verbindungsaufbau zu einem Teilnehmer über ein erstes Netz, sowie Dienstrechner, Vermittlungseinrichtung und Endgeräte**
Method of establishing a connection with a subscriber over a first network with service processor, switching device and terminal
Procédé pour établir une connexion avec un abonné par un premier réseau, ainsi qu'un processeur de service, un dispositif de commutation et un terminal

(30) Priorität: 08.04.1994 DE 4412104
(43) Veröffentlichungstag der Anmeldung: 11.10.1995
(73) Patentinhaber: ALCATEL, 75008 Paris (FR)
(72) Erfinder: Stahl, Uwe, D-71229 Leonberg (DE)
(74) Vertreter: Brose, Gerhard, Dipl.-Ing.

(56) Entgegenhaltungen:
- EP-A- 0 425 203
- US-A- 5 099 511
- US-A- 5 233 648
- US-A- 5 333 185
- ATOUI M: "VIRTUAL PRIVATE NETWORK CALL PROCESSING IN THE INTELLIGENT NETWORK" DISCOVERING A NEW WORLD OF COMMUNICATIONS, CHICAGO, JUNE 14 - 18, 1992, Bd. 2, 14. Juni 1992, Seiten 561-565, XP000326744 INSTITUTE OF ELECTRICAL AND ELECTRONICS ENGINEERS

## Beschreibung

Die Erfindung betrifft ein Verfahren für den Verbindungsaufbau zu einem Teilnehmer über ein erstes Netz nach dem Oberbegriff von Anspruch 1, einen Dienstrechner zum Anschluß an ein erstes Netz nach dem Oberbegriff von Anspruch 12, eine Vermittlungseinrichtung für ein zweites Netz nach dem Oberbegriff von Anspruch 13 und ein Endgerät für den Anschluß an ein Netz nach dem Oberbegriff von Anspruch 14.

In den meisten Ländern haben sich im Laufe der Zeit zwei verschiedene Netztypen entwickelt, nämlich zum Ersten ein öffentliches Telekommunikationsnetz (z.B. Fernsprechnetz, ISDN-Netz) und zum Zweiten eine nicht unerhebliche Zahl von Privat- oder Sondernetzen.

Ein privates Netz besteht in den meisten Fällen aus einer oder mehreren Nebenstellenanlagen, an die mehrere Fernsprechendgeräte angeschlossen sind und die über mindestens eine Verbindung zum öffentlichen Netz verfügen. Ein solches Netz findet man z.B. häufig bei Firmen oder Behörden. Weiter treten im zunehmenden Maße private Netze von privaten Netzbetreibern in Erscheinung, die aus mehreren miteinander vermaschten Vermittlungsstellen bestehen.

Für den Verbindungsaufbau von einem Teilnehmer des öffentlichen Netzes zu einem Teilnehmer des privaten Netzes wird im Allgemeinen eine Durchwahlrufnummer gewählt, die sich aus einem ersten und einem zweiten Teil zusammensetzt. Der erste Teil, oft auch als Kennzahl der Nebenstelle bezeichnet, wählt dabei einen Netzübergang von dem öffentlichen Netz in das private Netz an. Der zweite Teil, auch Teilnehmerrufnummer genannt, stellt die Rufnummer des Teilnehmers im Nummerierungsbereich des privaten Netzes dar. Ein Ruf für solch einen Verbindungsaufbau enthält so eine Rufnummer, deren erster Teil vom öffentlichen Netz und deren zweiter Teil vom privaten Netz für den Verbindungsaufbau ausgewertet wird.

Die Erfindung geht nun von einem Verbindungsaufbau vom öffentlichen Netz in ein privates Netz mittels eines Dienstes aus, der Rufnummern umwertet. Ein solcher Dienst ist beispielsweise der als Service 180 bezeichnete Dienst der Deutschen Bundespost, der in dem Kapitel 5.2.3.3 Service 180 (Bundeseinheitliche Rufnummer) in dem Buch "Neue Dienste im Intelligenten Telefonnetz" von Wilhelm Grusch, herausgegeben vom RV. Decker's Verlag G. Schenck, auf den Seiten 164-168 beschrieben wird. Dieser Dienst stellt z.B. Firmen oder Behörden eine einheitliche, standortneutrale Rufnummer für verschiedene Ziele zur Verfügung. Für den Verbindungsaufbau zu einer Firma mit solch einer Rufnummer wird zuerst der Dienst angewählt. Der Dienst empfängt den Ruf, entnimmt ihm die Rufnummer und wertet sie um. Anschließend leitet er den Ruf an diese umgewertete Rufnummer weiter. Die umgewerteten Rufnummern können dabei auch Rufnummern von verschiedenen, mit dem öffentlichen Netz verbundenen privaten Netzen sein. Damit ist es möglich, Angestellte einer Firma, die über verschiedene, räumlich getrennte private Netze mit dem öffentlichen Netz verbunden sind, unter einer einzigen Firmenrufnummer zu erreichen. Mit zunehmender Größe der privaten Netze ergibt sich nun das Problem, daß die vorhandene Anzahl von Ziffern in einer Durchwahlrufnummer, die für die Teilnehmerrufnummern zur Verfügung stehen, nicht mehr ausreichend ist. Die Anzahl der Ziffern einer Rufnummer ist international zur Zeit auf maximal 12 Ziffern und ab 1.1.97 auf maximal 15 Ziffern genormt. Dies ist z.B. für ISDN (= Integrated Services Digital Network) in der CCITT-Empfehlung E.164 festgelegt. Da für die Auswahl des Netzübergangspunkt zu dem privaten Netz schon ein Großteil dieser Ziffern verbraucht wird, bleibt nur noch ein kleiner Teil für die Teilnehmerrufnummer über. Diese Probleme ergeben sich auch bei dem obigen Verbindungsaufbau mittels Service 180.

In dem Beitrag "Virtual Private Network Call Processing in the Intelligent Network" von M. Atoui, Supercomm/ICC'92, Discovering a new world of communications, Chicago, Juni 14 - 18, 1992, Bd. 2, 14. Juni 1992, Seiten 561-565, wird weiter die Implementierung eines VPN-Dienstes (VPN = Virtual Private Network) mittels einer IN-Architektur (IN = Intelligent Network) beschrieben.

Ein VPN-Ruf wird von einer Dienstvermittlungsstelle (SSP = Service Switching Point) anhand einer Dienstkennung erkannt. Wird ein VPN-Ruf erkannt, wird von der Dienstvermittlungsstelle eine Dienstanforderung an einen Dienststeuerungsknoten (SCP = Service Control Point) gesendet. Der Dienststeuerknoten entscheidet dann mittels Zugriff auf eine VPN-Datenbank über die weitere Bearbeitung des VPN Rufes. Hierbei führt die VPN Datenbank eine Rufnummern-Umwertung zwischen Rufnummern nach einem nutzerspezifischen Rufnummernplan und physikalischen Netzadressen durch.

Mittels der VPN Datenbank wird so ein benutzerspezifischer Rufnummernplan definiert. Dieser Rufnummernplan kann fünf unterschiedliche Komponenten enthalten: Zugangscodes (Dienstkennung), um Zugang zu dem VPN Dienst zu erhalten; Adress-Nummern, die vom Teilnehmer gewählt werden, um das Ziel des Rufes anzuzeigen; Vergebührungscodes, um Kosten zuzuordenen, Identifizierungscodes, um den Teilnehmer zu Identifizieren und zu Verifizieren; Authorisierungsnummern, um eine Authorisierung des Teilnehmers zu gewährleisten.

Der Erfindung liegt so die Aufgabe zugrunde, den Verbindungsaufbau von einem ersten in ein zweites Netz zu ermöglichen, das über einen größeren Adressierungsraum verfügt.

Die Aufgabe wird gelöst durch ein Verfahren nach der Lehre des Anspruchs 1, durch einen Dienstrechner nach der Lehre des Anspruchs 12, durch eine Vermittlungseinrichtung nach der Lehre des Anspruchs 13 und durch ein Endgerät nach der Lehre von Anspruch 14.

Der Grundgedanke der Erfindung ist, bei dem Verbindungsaufbau zu einem Teilnehmer einen Teil der dem Teilnehmer zugeordneten Rufnummer auf eine nicht für die Signalisierung von Wahlinformationen vorgesehene Weise von dem ersten in das zweite Netz zu übertragen.

Daraus erwächst der Vorteil, daß die Anzahl der für das zweite Netz verwendbaren Rufnummernziffern erhöht wird.

Unter Rufnummer ist hier nicht nur eine Kennung zur Kennzeichnung eines Teilnehmeranschlußes zu verstehen, sondern auch eine Kennung zur Kennzeichnung eines Teilnehmers.

Vorteilhafte Ausgestaltungen der Erfindung sind den Unteransprüchen zu entnehmen.

Insbesondere ist es vorteilhaft einen Dienst des ersten Netzes anzuwählen, der einen Teil der Rufnummer an eine Vermittlungseinrichtung des zweiten Netzes auf eine nicht für die Rufnummernsignalisierung vorgesehene Weise übermittelt. Dadurch ist es möglich, daß für die Signalisierung der Rufnummer zwischen dem Dienst und dem gerufenen Teilnehmer mehr als 15 Ziffern verwendet werden können. Eine Vergrößerung des Rufnummernvorrats ergibt sich nun daraus, daß die Rufnummer des Dienstes und die Kennung für das zweite Netz im Regelfall kürzer als die Rufnummer des Netzübergangs ist, oder daß der Dienst weitere Informationen vom rufenden Teilnehmer nachfordern kann. Die Rufnummer des Dienstes und die Kennung für das zweite Netz ist hierbei insbesondere dann kürzer, wenn der Netzübergang ins zweite Netz über die Durchwahl durch weitere Netze erfolgt.

Ein weiterer Vorteil ergibt sich bei mehreren Netzübergängen zu dem zweiten Netz. Jedem dieser Netzübergänge müßte eine Rufnummer im öffentlichen Netz mit einer gewissen Anzahl von Ziffern für die Teilnehmerrufnummer zur Verfügung gestellt werden. Die Anzahl dieser Ziffern bestimmen dabei den möglichen Adressierungsraum im privaten Netz. Bei der Erfindung wird dagegen nur jeweils eine Rufnummer pro Netzübergang und eine Rufnummer für den Dienst mit einer, dem Adressierungsraum entsprechenden Anzahl von Ziffern benötigt. So ergibt sich, insbesondere bei einer großen Anzahl von Netzübergängen in das zweite Netz oder einer großen Anzahl von Teilnehmern im zweiten Netz eine erhebliche Einsparung in Bezug auf den Rufnummernvorrat des ersten Netzes.

Noch ein Vorteil ergibt sich für zweite Netze, z.B. Mobilfunk-Netze, in denen der Teilnehmer über eine von mehreren Teilnehmerschnittstellen erreichbar ist. Diese Netze benötigen für den Verbindungsaufbau zum Teilnehmer dessen Kennung, die meist aus einer größeren Anzahl von Ziffern besteht und so nur schlecht im Ruf transportiert werden kann. Die Erfindung bietet hierfür eine Lösung an.

Im Folgenden wird nun die Erfindung anhand dreier Ausführungsbeispiele unter Zuhilfenahme der beiliegenden Zeichnungen erläutert.
- Fig. 1: zeigt eine symbolische Darstellung einer Kommunikationsanordnung mit einem erfindungsgemäßen Dienstrechner und mehreren erfindungsgemäßen Vermittlungseinrichtungen für ein erstes Ausführungsbeispiel.
- Fig. 2: zeigt ein Ablaufdiagramm für den Verbindungsaufbau nach dem erfindungsgemäßen Verfahren für das erste Ausführungsbeispiel.
- Fig. 3: zeigt ein Blockschaltbild eines erfindungsgemäßen Dienstrechners nach Fig. 1.
- Fig. 4: zeigt ein Blockschaltbild einer erfindungsgemäßen Vermittlungseinrichtung nach Fig. 1.
- Fig. 5: zeigt ein Ablaufdiagramm für den Verbindungsaufbau nach dem erfindungsgemäßen Verfahren für ein zweites Ausführungsbeispiel.

Im ersten Ausführungsbeispiel wird die Anwendung des erfindungsgemäßen Verfahrens in einer Kommunikationsanordnung verdeutlicht, die aus einem privaten und einem öffentlichen Netz besteht und bei der dem öffentlichen Netz ein erfindungsgemäßer Diensterechner zugeordnet ist und das private Netz eine erfindungsgemäße Vermittlungseinrichtung enthält.

Es ist jedoch auch möglich, daß das erfindungsgemäße Verfahren in einer beliebigen anderen Kommunikationsanordnung durchgeführt wird, die aus mindestens zwei Kommunikationsnetzen besteht. Es ist wahrscheinlich, daß aufgrund der wachsenden Zahl von privaten Netzund Dienstanbieter solche Kommunikationsanordnungen zukünftig an Bedeutung gewinnen werden.

Bei einer solchen Kommunikationsanordnung würde hierbei ein Teilnehmer eines ersten oder eines beliebigen anderen Netzes einen Dienst des ersten Netzes anwählen, dieser Dienst würde gemäß dem erfindungsgemäßen Verfahren den Ruf zu einer Vermittlungseinrichtung eines zweiten Netzes weiterleiten, die den Ruf dann zu einem Teilnehmer des zweiten oder eines beliebigen anderen Netzes weiterleiten würde. Der Ruf könnte hierbei zwischen dem ersten und dem zweiten Netz ebenfalls über eine beliebige Anzahl anderer Netze geführt werden.

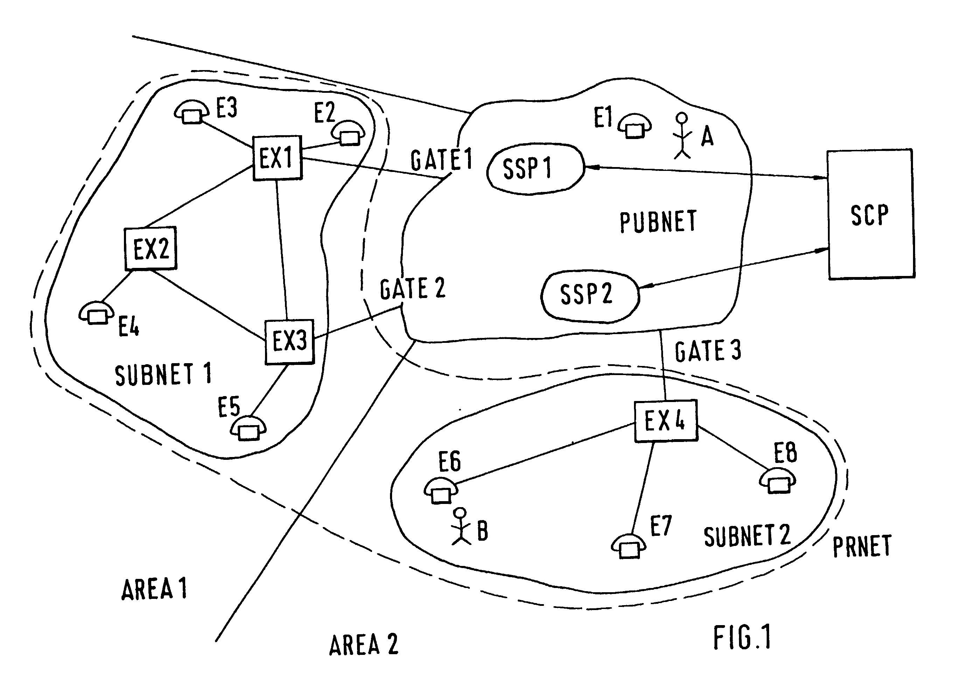

Fig. 1 zeigt ein öffentliches Netz PUBNET, ein privates Netz PRNET und einen Dienstrechner SCP.

Das private Netz PRNET stellt das Netz einer Firma dar, die an zwei verschiedenen Orten jeweils eine Niederlassung hat. Das private Netz PRNET besteht so aus zwei räumlich getrennten Unter-Netzen SUBNET1 und SUBNET2, wobei das Unter-Netz SUBNET1 in einem Gebiet AREA1, und das Unter-Netz SUBNET2 in einem Gebiet AREA2 liegt. Das Unter-Netz SUBNET1 ist über zwei Netzübergänge GATE1 und GATE2 und das Unter-Netz SUBNET2 über einen Netzübergang GATE3 mit dem öffentlichen Netz PUBNET verbunden.

Es ist hierbei auch möglich, daß die Netzübergänge GATE1 bis GATE3 das öffentliche Netz PUBNET nicht direkt mit den Unter-Netzen SUBNET1, SUBNET2 bzw. SUBNET3 verbinden, sondern daß sie diese Netze über ein oder mehrere weitere Netze mit diesen Unter-Netzen verbindet. In diesem Fall müßten zusätzliche Nummern für die Durchwahl durch diese Netze vorgesehen werden. Auch eine Verbindung über permanent oder semipermanent durchgeschaltete Verbindungen wäre möglich.

Das Unter-Netz SUBNET1 weist drei Vermittlungseinrichtungen EX1 bis EX3 und mehrere Endgeräte auf, von denen die Endgeräte E2 bis E5 gezeigt sind. Die Vermittlungseinrichtungen EX1 bis EX3 sind miteinander verbunden. Die Vermittlungseinrichtung EX1 ist über den Netzübergang GAT1 und die Vermittlungseinrichtung EX3 über den Netzübergang GAT2 mit dem öffentlichen Netz PUBNET verbunden. Die Endgeräte E2 und E3 sind mit der Vermittlungseinrichtung EX1, das Endgerät E4 mit der Vermittlungseinrichtung EX2 und das Endgerät E5 mit der Vermittlungseinrichtung EX3 verbunden.

Das Unter-Netz SUBNET2 weist eine Vermittlungseinrichtung EX4 und mehrere mit der Vermittlungseinrichtung EX4 verbundene Endgeräte auf, von denen die Endgeräte E6 bis E8 gezeigt sind. Die Vermittlungseinrichtung EX4 ist über den Netzübergang GATE3 mit dem öffentlichen Netz PUBNET verbunden.

Bei den Endgeräten E2 bis E8 handelt es sich jeweils um Endgeräte für Telekommunikationsnetze, wie z.B. Telefon, Fax, oder einen entsprechend ausgestalteten Computer. Weiter ist es möglich, daß es sich hierbei um einen Zugang zu einem Diensterechner oder Dienstesystem (z.B. IN = Intelligent Network) handelt.

Die Vermittlungseinrichtungen EX1 bis EX4 sind wie übliche Nebenstellenvermittlungen aufgebaut und so für den Auf- und Abbau von Verbindungen zwischen den an ihnen angeschlossenen Endgeräten E6 bis E8 und den übrigen Endgeräten des privaten Netzes PRNET und des öffentlichen Netzes PUBNET verantwortlich. Im Gegensatz zu üblichen Nebenstellenvermittlungen können sie jedoch einen Teil der Rufnummer eines ankommenden Rufes auf eine andere Weise, als die für die Signalisierung von Wahlinformationen vorgesehene, empfangen.

Das öffentliche Netz PUBNET wird von einem öffentlichen Telekommunikationsnetz gebildet. Es enthält so auch mehrere Vermittlungsstellen und eine Vielzahl von mit ihnen verbundenen Endgeräten. Sowohl das öffentliche Netz PUBNET als auch das private Netz PRNET sind, ohne Einschränkung der Allgemeinheit, ISDN-fähig.

Von den Endgeräten des öffentlichen Netzes PUBNET ist hier nur ein Endgerät E1 gezeigt. Es ist wie die Endgeräte E2 bis E8 ausgestaltet. Von den Vermittlungsstellen des öffentlichen Netzes PUBNET sind hier nur zwei Vermittlungsstellen SSP1 und SSP2 gezeigt. Die Vermittlungsstellen SSP1 und SSP2 unterscheiden sich darin von den übrigen Vermittlungsstellen des öffentlichen Netzes PUBNET, daß sie beim Auftreten einer bestimmten Ausscheidenummer Anfragen an den Dienstrechner SCP übermitteln. Diese Ausscheidenummer wird im Folgenden als Dienstkennung bezeichnet. Als Antwort darauf erhalten sie Steuerinformationen, die die weitere Behandlung des Rufes und das Senden von diesem Ruf zugeordneten Nachrichten betreffen. Die Vermittlungsstellen SSP1 und SSP2 stellen so zusammen mit dem Dienstrechner SCP einen Dienst im öffentlichen Netz PUBNET bereit.

Es ist auch möglich, daß eine andere Anzahl von Vermittlungsstellen wie die Vermittlungsstellen SSP1 und SSP2 ausgestaltet und mit dem Dienstrechner SCP verbunden sind. Es ist jedoch mindest eine solche Vermittlungsstelle notwendig.

Weiter ist es möglich, daß der Dienstrechner SCP in eine Vermittlungsstelle integriert ist und daß im öffentlichen Netz PUBNET eine oder mehrere derart ausgestaltete Vermittlungsstellen vorhanden sind.

Die Endgeräte E1 und E6 werden jeweils von einem Teilnehmer A bzw. B bedient.

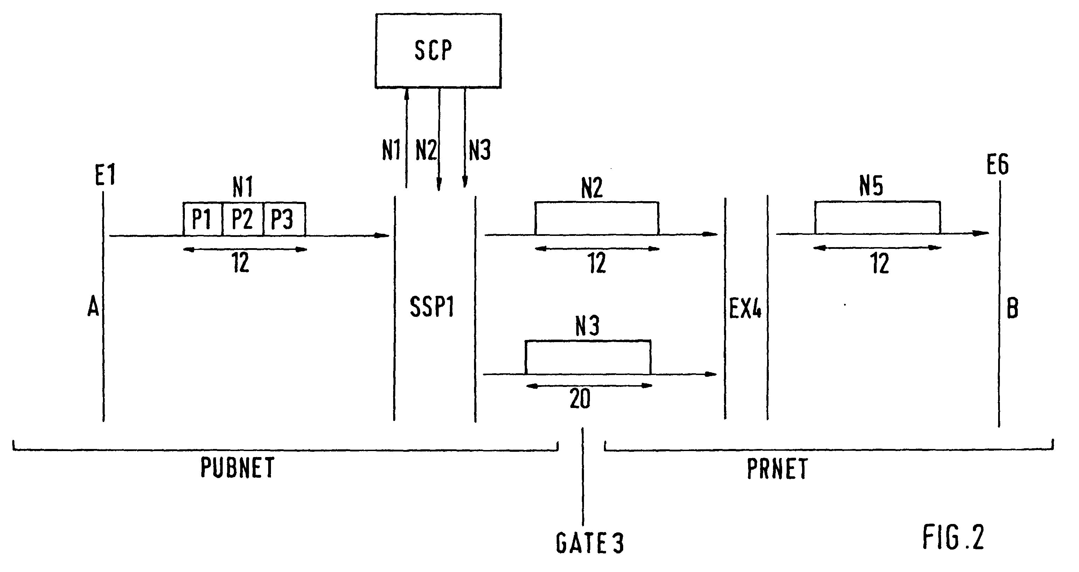

Der Verbindungsaufbau zu einem Teilnehmer des privaten Netzes PRNET über das öffentliche Netz PUBNET wird nun beispielhaft anhand des Verbindungsaufbaus vom Teilnehmer A zum Teilnehmer B erläutert. Der Verbindungsaufbau wird dabei in Fig. 2 in Form eines Ablaufdiagramms graphisch dargestellt.

Fig. 2 zeigt die Teilnehmer A und B, die Endgeräte E1 und E6, die Vermittlungseinrichtung EX4, die Vermittlungsstelle SSP1 und den Dienstrechner SCP. Der Verbindungsaufbau vom Teilnehmer A zum Teilnehmer B läuft bis zum Netzübergang GATE3 innerhalb des öffentlichen Netzes PUBNET und sodann innerhalb des privaten Netzes PRNET ab.

Teilnehmer A will eine Verbindung mit Teilnehmer B aufbauen. Hierfür sendet er eine Ruf-Anforderung von seinem Endgerät E1 an den Dienst, der von dem Dienstrechner SCP und den Vermittlungsstellen SSP1 und SSP2 bereitgestellt wird. Die Ruf-Anforderung enthält dabei als Rufnummer eine Nummer N1, die aus drei Teilen P1 bis P3 aufgebaut ist. Die maximale Ziffernanzahl der Nummer N1 beträgt 12 Ziffern. Der Teil P1 ist die Dienstkennung des Dienstes. Der Teil P2 steht für das private Netz PRNET. Der dritte Teil ist die Teilnehmerrufnummer des Teilnehmers B nach dem privaten Nummerierungsplan des privaten Netzes PRNET.

Der Ruf wird nun aufgrund der Dienstkennung, die der Teil P1 darstellt, zu einer der Vermittlungsstellen SSP1 oder SSP2, hier zur Vermittlungsstelle SSP1, geleitet. Erreicht er diese, so erkennt sie die Dienstkennung und übermittelt die Nummer N1 an den Dienstrechner SCP. Dieser erzeugt aus der Nummer N1 die Rufnummer des Teilnehmers B und teilt diese in zwei Teile, die Nummern N2 und N3 auf. Diese Nummern sendet er an die Vermittlungsstelle SSP1 und veranlaßt sie, den Ruf mit der Nummer N2 als Rufnummer weiterzuleiten und die Nummer N3 an die für die ISDN-Subadresse vorgesehene Stelle in der Ruf-Anforderung einzutragen. Die maximale Ziffernzahl der Nummer N3 beträgt hierbei 20 Ziffern. Die Nummer N2 wird hier von dem Dienstrechner SCP so gewählt, daß sie den Ruf zu der Vermittlungseinrichtung EX4 leitet.

Für den Fall, daß die Ruf-Anforderung über ein oder mehrere weitere Netze zwischen dem öffentlichen Netz PUBNET und dem Unter-Netz SUBNET2 geleitet werden würde, würde die Nummer N2 so aus Anteilen bestehen, die für die Durchwahl durch das öffentliche Netz PUBNET und für die Durchwahl durch die einzelnen weiteren Netze bis zum Unter-Netz SUBNET2 verantwortlich wären.

Es ist auch möglich, daß der Dienstrechner nach Empfang der Nummer N1 eine Meldung zurück an das Endgerät E1 sendet und weitere Nummern nachfordert. Diese Nummern werden von dem Dienstrechner SCP an die Nummer N1 angefügt und es ergibt sich eine neue Nummer N1' die wie die Nummer N1 weiterverarbeitet wird. Diese neue Nummer N1' kann jedoch mehr als 12 Ziffern umfassen.

Die Vermittlungseinrichtung EX4 entnimmt die Nummer N3 aus dem für die ISDN-Subadresse vorgesehenen Bereich und erzeugt aus ihr und der Nummer N2 eine Nummer N5. Die Nummer N5 wählt den Teilnehmer B im privaten Netz PRNET aus und stellt hier die Teilnehmerrufnummer des Teilnehmers B nach dem privaten Nummerierungsplan des privaten Netzes PRNET dar. Danach wird der Ruf zu dem Endgerät E6 weitergeleitet, das dem Teilnehmer B zugeordnet ist. Danach kann der Verbindungsaufbau erfolgen.

Für den Fall, daß der Teilnehmer B nicht ein Teilnehmer des privaten Netzes PRNET sondern ein Teilnehmer eines mit dem Unter-Netz SUBNET2 über einen weiteren Netzübergang verbundenen weiteren Netzes wäre, würde die Nummer N5 nicht eine Nummer des privaten Nummerierungsplans des privaten Netzes PRNET darstellen. Sie würde vielmehr die Durchwahl vom Unternetz SUBNET1 zum Teilnehmer B des weiteren Netzes darstellen.

Es ist auch möglich, daß die Funktionen der Vermittlungseinrichtung EX4, die mit der Erzeugung der Nummer N5 zusammenhängen, von einem Diensterechner erbracht werden, der direkt von der Nummer N2 oder von einem Teil der Nummer N2 angewählt wird.

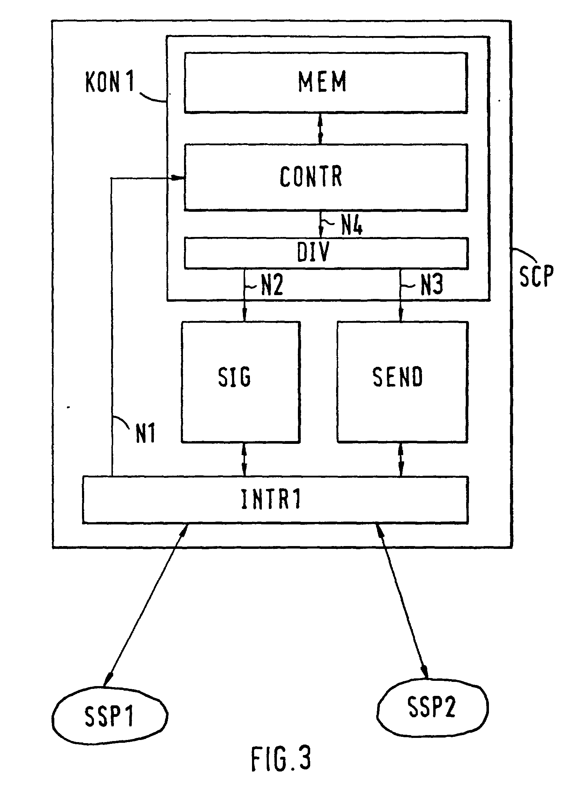

Der genaue Funktionsablauf im Dienstrechner SCP und zwischen dem Dienstrechner SCP und der Vermittlungsstelle SSP1 wird nun anhand von Fig. 3 verdeutlicht.

Fig. 3 zeigt den Dienstrechner SCP und die beiden Vermittlungsstellen SSP1 und SSP2. Der Dienstrechner SCP tauscht mit den Vermittlungsstellen SSP1 und SSP2 Daten aus. Der Dienstrechner SCP weist eine Umwerteinrichtung KON1, eine Signalisierungseinrichtung SIG, eine Sendeeinrichtung SEND und eine Schnittstelleneinrichtung INTR1 auf.

Die Schnittstelleneinrichtung INTR1 sendet und empfängt Daten von den Vermittlungsstellen SSP1 und SSP2. Die Umwerteinrichtung KON1 empfängt von der Schnittstelleneinrichtung INTR1 die Nummer N1 und sendet an die Signalisierungseinrichtung SIG die Nummer N2 und an die Sendeeinrichtung SEND die Nummer N3. Die Signalisierungseinrichtung SIG und die Sendeeinrichtung SEND tauschen jeweils mit der Schnittstelleneinrichtung INTR1 Daten aus.

Die Schnittstelleneinrichtung INTR1 dient zur Kommunikation mit den Vermittlungsstellen SSP1 und SSP2. Erkennt eine der beiden Vermittlungsstellen SSP1 und SSP2 die Dienstkennung im Teil P1 der Nummer N1, die hier die Rufnummer eines ankommenden Rufes darstellt, so sendet sie an den Dienstrechner SCP eine Anforderung. Diese Anforderung enthält unter anderem die sich in der Ruf-Anforderung befindende Rufnummer des Empfängers. Diese Rufnummer ist hier die Nummer N1, die aus den Teilen P1, P2 und P3 besteht. Die Schnittstelleneinrichtung INTR1 entnimmt der Anforderung nun die Rufnummer, also die Nummer N1, und leitet diese Nummer an die Umwerteinrichtung KON1 weiter. Die Schnittstelleneinrichtung INTR1 ihrerseits erhält von der Signalisierungseinrichtung SIG und der Sendeeinrichtung SEND Steuerbefehle und ermöglicht es diesen beiden Einrichtungen mit den Vermittlungsstellen SSP und SSP2 zu kommunizieren.

Die Signalisierungseinrichtung SIG erhält von der Umwerteinrichtung KON1 die Nummer N2. Dies veranlaßt sie, diejenige der beiden Vermittlungsstellen SSP1 und SSP2, von der die Anforderung mit der Nummer N1 gekommen ist, anzuweisen, die Nummer N2 an die für die Rufnummer vorgesehene Stelle in dem wartenden Ruf einzutragen. Desweiteren veranlaßt sie diese Vermittlungsstelle, den Ruf entsprechend dieser, nun der Nummer N2 entsprechenden Rufnummer, weiterzuleiten. Die Sendeeinrichtung SEND erhält von der Umwerteinrichtung KON1 die Nummer N3. Dies veranlaßt die Sendeeinrichtung SEND, an diejenige der beiden Vermittlungsstellen SSP1 und SSP2, die die Anforderung mit der Nummer N1 an den Dienstrechner SCP gesendet hat, einen Steuerbefehl zu senden, der sie anweist, die Nummer N3 an die für die ISDN-Subadresse vorgesehene Stelle in dem wartenden Ruf einzutragen. Damit wird die Nummer N3 beim Weiterleiten des wartenden Rufes automatisch mit der Ruf-Anforderung mittransportiert.

Es ist auch möglich, daß die Nummer N3 von der Sendeeinrichtung SEND auf andere Weise versendet wird. Eine Möglichkeit ist, daß die Nummer N3 von der Sendeeinrichtung SEND an eine andere Stelle in der Ruf-Anforderung eingetragen wird. Eine weitere Möglichkeit ist, daß die Sendeeinrichtung SEND die Nummer N3 über einen Signalisierungskanal unabhängig von dem wartenden Ruf an die Vermittlungseinrichtung EX4 sendet. Es ist auch möglich, daß die Sendeeinrichtung SEND einen Nutzkanal zu der Vermittlungseinrichtung EX4 aufbaut und in diesem Nutzkanal die Nummer N3 in entsprechend kodierter Form überträgt.

Die Umwerteinrichtung KON1 weist eine Speichereinrichtung MEM, eine Steuereinrichtung CONTR und eine Zerlege-Einrichtung DIV auf. Die Steuereinrichtung CONTR tauscht Daten mit der Speichereinrichtung MEM aus und sendet an die Zerlege-Einrichtung DIV Daten über eine Nummer N4.

In der Speichereinrichtung MEM sind jeder Teilnehmerrufnummer des privaten Netzes PRNET die öffentliche Kennzahl der Nebenstellenanlage desjenigen der Netzübergänge GATE1 bis GATE3 zugeordnet, über die das entsprechende Endgerät am besten erreichbar ist.

Führt dieser Netzübergang über weitere Netze, so ist in der Speichereinrichtung MEM jeweils ein oder mehrere Durchwahlnummern durch diese Netze in das entsprechende Unter-Netz abgelegt. Weiter kann in ihr der private Nummerierungsplan des privaten Netzes PRNET sowie die Zuordnung dieser Teilnehmerrufnummern zu den Unter-Netzen SUBNET1 und SUBNET2 abgelegt sein. Die Steuereinrichtung CONTR empfängt über die Schnittstelleneinrichtung INTR1 die Nummer N1. Sie überprüft anhand des Teils P2 die Nummer N1, die die Netzkennung des privaten Netzes PRNET enthält, ob der Ruf an einen Teilnehmer des privaten Netzes PRNET gerichtet ist. Ist dies der Fall, so entnimmt sie der Speichereinrichtung MEM die öffentliche Nebenstellennummer desjenigen der Netzübergänge GATE1 bis GATE3, über den der Teilnehmer am besten zu erreichen ist. In diesem Beispiel ist dies die öffentliche Nebenstellennummer des Netzübergangs GATE3. An diese Rufnummer fügt sie die Teilnehmerrufnummer des Teilnehmers an. So wird eine Nummer N4 erzeugt, die die Rufnummer des Teilnehmers darstellt.

Wenn der ausgewählte Netzübergang über ein oder mehrere weitere Netze führen würde, dann würde der Speichereinrichtung die entsprechende Durchwahlnummer entnommen. Wenn hierbei mehrere Wege, d.h. mehrere Durchwahlnummern zur Verfügung stünden, dann könnte die Steuereinrichtung aufgrund bestimmter vorgegebenen Kriterien, wie z.B. Verkehrsbelastung, Übertragungsqualität oder Gebührenaspekten, den jeweils günstigsten Weg auswählen. Eine solche Entscheidung wäre hierbei auch im Fall von mehreren Netzübergängen wie nach Fig. 1 für das Unter-Netz SUBNET1 möglich.

Die Zerlege-Einrichtung DIV zerlegt die Rufnummer N4 in die Nummer N2 und in die Nummer N3. Die Nummer N2 entspricht dabei der öffentlichen Nebenstellennummer des Netzübergangs GATE3 und die Nummer N3 der Teilnehmerrufnummer des Teilnehmers nach dem privaten Nummerierungsplan des privaten Netzes PRNET.

Es ist auch möglich, daß die Zerlegeeinrichtung DIV die Rufnummer N4 anders zerlegt. So ist es beispielsweise möglich, daß die Nummer N2 die öffentliche Nebenstellennummer des Netzüberganges GATE3 und einen Teil der Teilnehmerrufnummer enthält. Die Nummer N3 würde dann den Rest der Rufnummer N4 enthalten. Der Dienstrechner SCP erhält so von der Vermittlungsstellen SSP1 eine Anforderung mit einer Nummer N1. Diese Nummer N1 enthält unter anderem eine Kennung für das gewünschte private Netz, hier das private Netz PRNET, und die Teilnehmerrufnummer des gewünschten Teilnehmers nach dem privaten Nummerierungsplan. Die Umwerteinrichtung KON1 erzeugt aus der Nummer N1 sodann eine Nummer N4, die eine Durchwahlnummer in das private Netz darstellt. Die Nummer N4 besteht so aus der öffentlichen Nebenstellennummer des Netzübergangs GATE3 und der Teilnehmerrufnummer des Teilnehmers B nach dem privaten Nummerierungsplan des privaten Netzes PRNET. Anschließend teilt sie die Rufnummer N4 in eine Nummer N2 und eine Nummer N3. Die Signalisierungseinrichtung SIG trägt die Nummer N2 in den wartenden Ruf ein und veranlaßt die Weiterleitung des Rufes. Die Sendeeinrichtung SEND übermittelt die Nummer N3 an die Vermittlungsstelle EX4.

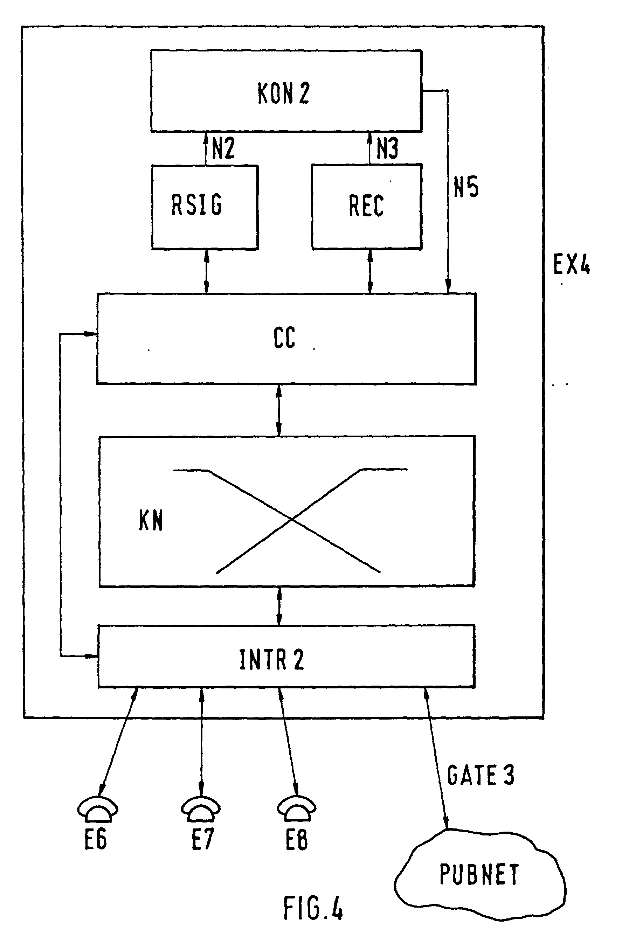

Fig. 4 zeigt die Vermittlungseinrichtung EX4. Sie weist ein Koppelnetz KN, eine Verbindungs-Steuerung CC, eine Schnittstelleneinrichtung INTR2, eine Umwerteinrichtung KON2, eine Empfangseinrichtung REC und einen Rufauswerter RSIG auf.

Die Schnittstelleneinrichtung INTR2 ist mit den Endgeräten E6 bis E8 und über den Netzübergang GATE3 mit dem öffentlichen Netz PUBNET verbunden. Das Koppelnetz KN tauscht mit der Schnittstelleneinrichtung INTR2 Daten aus. Die Verbindungs-Steuerung CC tauscht mit der Schnittstelleneinrichtung INTR2 und dem Koppelnetz KN Steuer- und Zustandsinformationen aus. Der Rufauswerter RSIG empfängt von der Verbindungs-Steuerung CC Daten und sendet Daten an die Umwerteinrichtung KON2. Ebenso empfängt die Empfangseinrichtung REC Daten von der Verbindungs-Steuerung CC und sendet Daten an die Umwerteinrichtung KON2. Die Verbindungs-Steuerung CC empfängt Daten von der Umwerteinrichtung KON2.

Die Verbindungs-Steuerung CC steuert den Auf- und Abbau von Verbindungen über die Schnittstellen-Einrichtung INTR3 und das Koppelnetz KN. Darüberhinaus ist sie mit einer Einrichtung versehen, die einen Ruf mit einer nicht vollständigen Rufnummer, der aus dem öffentlichen Netz PUBNET kommt, erkennt. Ein solcher Ruf veranlaßt sodann die Verbindungs-Steuerung CC die in der Ruf-Anforderung enthaltene Rufnummer an den Rufauswerter RSIG weiterzureichen. Wenn dieser Ruf-Anforderung Nachrichten zugeordnet sind, also wenn beispielsweise eine weitere Nummer an der für die ISDN-Subadresse vorgesehene Stelle steht, werden diese Nachrichten an die Empfangseinrichtung REC weitergereicht. Ist dies nicht der Fall, so erhält die Umwerteinrichtung KON2 von der Empfangseinrichtung REC keine Nummer und kann so den Teilnehmer, an den der Ruf gerichtet ist, nicht bestimmen. Der Ruf wird deshalb in diesem Fall von der Verbindungs-Steuerung CC nicht weiter bearbeitet. Der Rufauswerter RSIG entnimmt die Rufnummer, hier die Nummer N2, dem Ruf und gibt sie an die Umwerteinrichtung KON2 weiter. Die Empfangseinrichtung REC empfängt die dem Ruf zugeordnete Nachricht und erzeugt daraus eine Nummer, hier die Nummer N3.

Die Umwerteinrichtung KON2 empfängt die Nummern N2 und N3 und verfügt so wieder über die Nummer N4, die die Durchwahlnummer zum Teilnehmer B darstellt. Von dieser Nummer N4 trennt sie sodann die Teilnehmerrufnummer, die hier der Nummer N3 entspricht, ab und teilt diese Nummer der Verbindungs-Steuerung CC mit. Die Verbindungs-Steuerung CC trägt diese Nummer an die für die Rufnummer des Rufes vorgesehene Stelle in der Ruf-Anforderung ein und leitet den Ruf entsprechend weiter.

Ist der Ruf beim Teilnehmer B angekommen, so wird die Verbindung zwischen den Teilnehmern A und B durchgeschaltet.

In dem zweiten Ausführungsbeispiel wird die Anwendung des erfindungsgemäßen Verfahrens in einer Kommunikationsanordnung nach Fig. 1 beschrieben.

Bei diesem Ausführungsbeispiel wird die Rufnummer N3 des Teilnehmers direkt vom Teilnehmer A in das Endgerät E1 eingegeben oder vom Endgerät E1 auf ähnliche Weise wie durch den Diensterechner SCP nach Fig. 3 aus Eingaben des Teilnehmers A erzeugt. Diese Rufnummer wird dann vom Endgerät analog wie beim Diensterechner SCP nach Fig. 3 in zwei Nummern zerlegt. Anschließend wird ein Ruf mit der Nummer N2 als Rufnummer initiert und die Nummer N3 wie nach Fig. 2 und wie beim Diensterechner SCP nach Fig. 3 an die Vermittlungseinrichtung EX4 gesendet.

In dem dritten Ausführungsbeispiel wird die Anwendung des erfindungsgemäßen Verfahrens in einer Kommunikationsanordnung verdeutlicht, die aus einem öffentlichen Netz und einem privaten Netz für mobile Teilnehmer besteht.

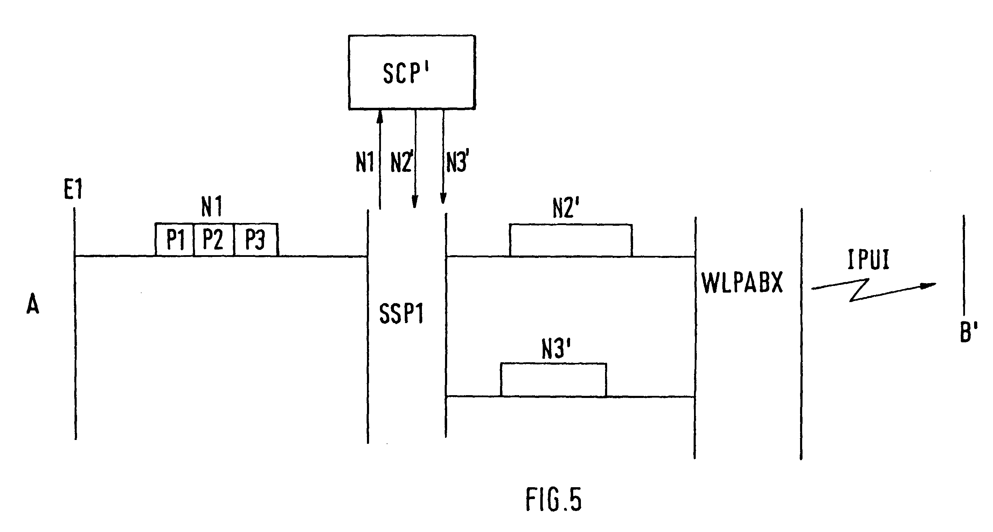

Das öffentliche Netz ist wie das öffentliche Netz PUBNET nach Fig. 1 aufgebaut. Allein der Dienstrechner SCP hat eine etwas andere Funktionsweise und wird so im folgenden als Dienstrechner SCP' bezeichnet. Das private Netz besteht aus mehreren Funk-Vermittlungsstellen in deren Funk-Bedeckungsbereichen ein Teilnehmer B' über sein mobiles Endgerät E6' erreicht werden kann. Der Verbindungsaufbau vom Teilnehmer A zum Teilnehmer B' wird nun anhand von Fig. 5 kurz erläutert.

Fig. 5 zeigt die Teilnehmer A und B', die Endgeräte E1 und E6' die Vermittlungsstelle SSP1, eine Funk-Vermittlungsstelle WLPABX, den Dienstrechner SCP', drei Nummern N1, N2' und N3' und eine Kennung IPUI.

Die Ruf-Anforderung mit der Nummer N1 wird wie nach Fig. 2 zur Vermittlungsstelle SSP1 geleitet und die Nummer N1 wird anschließend an den Dienstrechner SCP' übermittelt. Im Dienstrechner SCP' ist diejenige Funk-Vermittlungsstelle gespeichert, in deren Bereich sich der Teilnehmer B' befindet. Der Dienstrechner SCP bildet nun eine Rufnummer des Teilnehmers, die sich aus der Nebenstellennummer dieser Funk-Vermittlungsstelle, hier der Funk-Vermittlungsstelle WLPABX, und einer teilnehmerspezifischen Kennung, hier der Kennung IPUI (= International Personal User Identification), zusammensetzt. Diese Rufnummer teilt er in zwei Nummern N2' und N3' auf und leitet den Ruf wie nach Fig. 2 an die Funk-Vermittlungsstelle WLPABX weiter. Diese ermittelt aus den Nummern N2' und N3' die Kennung IPUI des Teilnehmers B' und sucht in mittels Paging, indem sie die Kennung IPUI aussendet. Ist der Teilnehmer B' gefunden, wird die Verbindung zwischen den Teilnehmern A und B' durchgeschaltet.

## Patentansprüche

1. Verfahren für den Verbindungsaufbau zu einem Teilnehmer (B, B'), **dadurch gekennzeichnet, dass** beim Verbindungsaufbau ein erster Teil (N2; N2') der dem Teilnehmer (B; B') zugeordneten Rufnummer (N4) auf eine für die Signalisierung von Wahlinformation vorgesehene Weise signalisiert wird und ein zweiter Teil (N3; N3') der dem Teilnehmer (B; B') zugeordneten Rufnummer (N4) unter Zuhilfenahme von Steuerbefehlen für eine Vermittlungseinrichtung (SSP1, SSP2) von einem ersten Netz (PUBNET) in ein zweites Netz (PRNET) übertragen wird.

2. Verfahren nach Anspruch 1, **dadurch gekennzeichnet, daß** ein Teilnehmer des ersten Netzes den ersten Teil (N2; N2') der Rufnummer (N4) auf die für die Signalisierung von Wahlinformationen vorgesehene Weise signalisiert, wodurch der Aufbau einer Verbindung zu einer Vermittlungsstelle (EX1 bis EX4; WLPABX) des zweiten Netzes (PRNET) veranlaßt wird, daß ein Dienst den anderen, zweiten Teil (N3; N3') der Rufnummer (N4) unter Zuhilfenahme von Steuerbefehlen für eine Vermittlungseinrichtung (SSP1, SSP2) an diese Vermittlungsstelle (EX1 bis EX4; WLPABX) sendet, und daß die Vermittlungsstelle (EX1 bis EX4; WLPABX) diesen zweiten Teil (N3; N3') der Rufnummer (N4) empfängt, auswertet und die Signalisierung für den weiteren Verbindungsaufbau zum Teilnehmer (B; B') veranlaßt.

3. Verfahren nach Anspruch 1, **dadurch gekennzeichnet, daß** eine Anforderung zum Aufbau einer Verbindung zum Teilnehmer (B; B') zuerst an einen Dienst des ersten Netzes (PUBNET) gerichtet wird, der dann eine dem Teilnehmer zugeordnete Rufnummer (N4) erzeugt und die Signalisierung zur Weiterleitung des Rufes an den Teilnehmer (B; B') durchführt, daß der Dienst den ersten Teil (N2; N2') der Rufnummer (N4) auf die für die Signalisierung von Wahlinformationen im ersten Netz (PUBNET) vorgesehene Weise signalisiert, wodurch der Aufbau einer Verbindung zu einer Vermittlungsstelle (EX1 bis EX4; WLPABX) des zweiten Netzes (PRNET) veranlaßt wird, daß der Dienst den anderen, zweiten Teil (N3; N3') der Rufnummer (N4) auf eine andere Weise an diese Vermittlungsstelle (EX1 bis EX4; WLPABX) sendet, und daß die Vermittlungsstelle (EX1 bis EX4; WLPABX) diesen zweiten Teil (N3; N3') der Rufnummer (N4) empfängt, auswertet und die Signalisierung für den weiteren Verbindungsaufbau zum Teilnehmer (B; B') veranlaßt.

4. Verfahren nach Anspruch 2 oder nach Anspruch 3, **dadurch gekennzeichnet, daß** es sich bei dem Teilnehmer (B; B') um einen Teilnehmer des zweiten Netzes (PRNET) handelt.

5. Verfahren nach Anspruch 2 oder nach Anspruch 3, **dadurch gekennzeichnet, daß** das erste Netz (PUBNET) von einem öffentlichen Netz und das zweite Netz (PRNET) von einem privaten Netz gebildet wird.

6. Verfahren nach Anspruch 2 oder nach Anspruch 3, **dadurch gekennzeichnet, daß** der erste Teil (N2; N2') der Rufnummer (N4) einen Netzübergang (GATE 1 bis GATE 3) zu dem zweiten Netz (PRNET) bestimmt, und der zweite Teil (N3, N3') der Rufnummer (N4) den Teilnehmer (B; B') innerhalb des zweiten Netzes (PRNET) bestimmt.

7. Verfahren nach Anspruch 2 oder nach Anspruch 3, **dadurch gekennzeichnet, daß** der zweite Teil (N3; N3') der Rufnummer (N4) zusammen mit einem Teil des ersten Teils (N2; N2') der Rufnummer (N4) den Teilnehmer (B; B') innerhalb des zweiten Netzes (PRNET) bestimmt.

8. Verfahren nach Anspruch 3, **dadurch gekennzeichnet, daß** der Dienst sich zuerst für einen von mehreren vorhandenen Netzübergängen (GATE 1 bis GATE 3) in das zweite Netz (PBNET) entscheidet und sodann die Rufnummer (N4) entsprechend diesem Netzübergang (GATE 1 bis GATE 3) erzeugt.

9. Verfahren nach Anspruch 2 oder nach Anspruch 3, **dadurch gekennzeichnet, daß** der zweite Teil der Rufnummer (N3; N3') über einen Nutzkanal gesendet wird.

10. Verfahren nach Anspruch 2 oder nach Anspruch 3, **dadurch gekennzeichnet, daß** in dem ersten Netz (PUBNET) und dem zweiten Netz (PRNET) ISDN-Signalisierungsverfahren verwendet werden und daß der zweite Teil (N3; N3') der Rufnummer (N4) an der für die ISDN-Subadresse vorgesehenen Stelle in der Ruf-Anforderung eingetragen wird.

11. Verfahren nach Anspruch 3, **dadurch gekennzeichnet, daß** der Dienst einen rufenden Teilnehmer (A) auffordert, ihm weitere Informationen über den gerufenen Teilnehmer (B; B') zu senden.

12. Dienstrechner (SCP) zum Anschluß an ein erstes Netz (PUBNET), das mit mindestens einem weiteren, zweiten Netz (PRNET) über mindestens einen Netzübergang (GATE 1 bis GATE 3) verbunden ist, mit einer Schnittstelle zur Kommunikation mit mindestens einer Vermittlungseinrichtung (SSP1, SSP2; WLPABX) des ersten Netzes (PUBNET), **dadurch gekennzeichnet, daß** der Dienstrechner (SCP) mit einer Umwerteinrichtung (KON1), einer Signalisierungseinrichtung (SIG) und einer Sendeeinrichtung (SEND) versehen ist, daß die Umwerteinrichtung (KON1) mit einer Einrichtung (CONTR) zum Erzeugen einer Rufnummer eines Teilnehmers (B; B') aus Daten, die in einem an den Dienstrechner (SCP) gerichteten Ruf enthalten sind und einer Einrichtung (DIV) zur Zerlegung dieser Rufnummer (N4) in einen ersten und einen zweiten Teil (N2; N2'/N3; N3') versehen ist, daß die Signalisierungseinrichtung (SIG) so ausgestaltet ist, daß sie die Signalisierung des ersten Teils (N2, N2') dieser Rufnummer (N4) als Wahlinformation und die Weiterleitung des Rufes veranlaßt, und daß die Sendeeinrichtung (SEND) so ausgestaltet ist, daß sie den zweiten Teil (N3; N3') der Rufnummer (N4) unter Zuhilfenahme von Steuerbefehlen für eine Vermittlungseinrichtung (SSP1, SSP2) an eine Vermittlungseinrichtung (EX1 bis EX4; WLPABX) des zweiten Netzes (PRNET) sendet.

13. Vermittlungseinrichtung (EX1 bis EX4; WLPABX) für ein zweites Netz (PRNET), das mit mindestens einem Netzübergang (GATE 1 bis GATE 3) zu einem weiteren, ersten Netz (PUBNET) versehen ist, wobei die Vermittlungseinrichtung (EX1 bis EX4; WLPABX) eine Verbindungs-Steuerung (CC) enthält, **dadurch gekennzeichnet , daß** die Vermittlungseinrichtung (EX1 bis EX4; WLPABX) mit einer Umwerteinrichtung (KON2) und mit einer Empfangseinrichtung (REC) zum Empfang und zum Weiterreichen von Nachrichten an die Umwerteinrichtung (KON2) versehen ist, daß die Verbindungs-Steuerung (CC) eine Einrichtung enthält, die so ausgestaltet ist, daß sie eine nicht vollständige Rufnummer einer Ruf-Anforderung aus dem ersten Netz (PUBNET) erkennt und eine der Ruf-Anforderung zugeordnete Nachricht an die Empfangseinrichtung (REC) weiterreicht, und daß die Umwerteinrichtung (KON2) so ausgestaltet ist, daß sie mittels der Ruf-Anforderung zugeordneten Nachricht eine Rufnummer (N5) eines Teilnehmers (B, B') erzeugt und die Verbindungs-Steuerung (CC) veranlaßt, den Ruf an diese Rufnummer (N5) weiterzuleiten.

14. Endgerät (E1) zum Anschluß an ein Netz (PUBNET), **dadurch gekennzeichnet, daß** das Endgerät (E1) mit einer Einrichtung versehen ist, die so ausgestaltet ist, daß sie beim Verbindungsaufbau zu einem Teilnehmer (B; B') einen Teil der dem Teilnehmer (B; B') zugeordneten Rufnummer (N4) unter Zuhilfenahme von Steuerbefehlen für eine Vermittlungseinrichtung (SSP1, SSP2) an das Netz (PUBNET) sendet.

## Claims

1. A method of establishing a connection to a subscriber (B; B'), **characterized in that** during the establishment of the connection, a first part (N2; N2') of the call number (N4) assigned to the subscriber (B; B') is signaled by a method intended for signaling dial information, and a second part (N3; N3') of the call number (N4) assigned to the subscriber (B; B') is transmitted from a first network (PUBNET) into a second network (PRNET) with the aid of control instructions for a switching facility (SSP1, SSP2).

2. A method as claimed in claim 1, **characterized in that** a subscriber of the first network signals the first part (N2; N2') of the call number (N4) by the method intended for signaling dial information, whereby the establishment of a connection to an exchange (EX1 to EX4; WLPABX) of the second network (PRNET) is initiated, that a service sends the other, second part (N3; N3') of the call number (N4) to this exchange (EX1 to EX4; WLPABX) with the aid of control instructions for a switching facility (SSP1, SSP2), and that the exchange (EX1 to EX4; WLPABX) receives this second part (N3; N3') of the call number (N4), evaluates it, and initiates the signaling for the further establishment of the connection to the subscriber (B; B').

3. A method as claimed in claim 1, **characterized in that** a request to establish a connection to the subscriber (B; B') is first directed to a service of the first network (PUBNET), which then generates a call number (N4) assigned to the subscriber and effects the signaling to route the call to the subscriber (B; B'), that the service signals the first part (N2; N2') of the call number (N4) by the method intended for signaling dial information in the first network (PUBNET), whereby the establishment of a connection to an exchange (EX1 to EX4; WLPABX) of the second network (PRNET) is initiated, that the service sends the other, second part (N3; N3') of the call number (N4) to this exchange (EX1 to EX4; WLPABX) by another method, and that the exchange (EX1 to EX4; WLPABX) receives this second part (N3; N3') of the number (N4), evaluates it, and initiates the signaling for the further establishment of the connection to the subscriber (B; B').

4. A method as claimed in claim 2 or 3, **characterized in that** the subscriber (B; B') is a subscriber of the second network (PRNET).

5. A method as claimed in claim 2 or 3, **characterized in that** the first network (PUBNET) is a public network, and that the second network (PRNET) is a private network.

6. A method as claimed in claim 2 or 3, **characterized in that** the first part (N2; N2') of the call number (N4) designates a gateway (GATE 1 to GATE 3) to the private network (PRNET), and that the second part (N3, N3') of the call number (N4) designates the subscriber (B; B') in the private network (PRNET).

7. A method as claimed in claim 2 or 3, **characterized in that** the second part (N3; N3') of the call number (N4), together with a portion of the first part (N2; N2') of the call number (N4), designates the subscriber (B; B') in the private network (PRNET).

8. A method as claimed in claim 3, **characterized in that** the service first decides on one of two or more existing gateways (GATE 1 to GATE3) to the second network (PBNET) and then generates the call number (N4) according to this gateway (GATE 1 to GATE 3).

9. A method as claimed in claim 2 or 3, **characterized in that** the second part (N3; N3') of the call number (N4) is sent over an information-carrying channel.

10. A method as claimed in claim 2 or 3, **characterized in that** ISDN signaling methods are used in the first network (PUBNET) and the second network (PRNET), and that the second part (N3; N3') of the call number (N4) is entered in the call request at the place intended for the ISDN subaddress.

11. A method as claimed in claim 3, **characterized in that** the service requests a calling subscriber (A) to send it further information about the called subscriber (B; B').

12. A service computer (SCP) for connection to a first network (PUBNET) which is connected to at least one further, second network (PRNET) via at least one gateway (GATE 1 to GATE 3), the service computer (SCP) comprising an interface for communication with at least one switching facility (SSP1, SSP2; WLPABX) of the first network (PUBNET), **characterized in that** the service computer (SCP) is provided with a translating device (KON1), a signaling device (SIG), and a sending device (SEND), that the translating device (KON1) is provided with a device (CONTR) for generating a call number of a subscriber (B; B') from data contained in a call request directed to the service computer (SCP), and with a device (DIV) for decomposing this call number (N4) into a first part (N2; N2') and a second part (N3; N3'), that the signaling device (SIG) is designed to initiate the signaling of the first part (N2, N2') of this call number (N4) as dial information and the advancement of the call, and that the sending device (SEND) is designed to send the second part (N3; N3') of the call number (N4) to a switching facility (EX1 to EX4; WLPABX) of the second network (PRNET) with the aid of control instructions for a switching facility (SSP1, SSP2).

13. A switching facility (EX1 to EX4; WLPABX) for a second network (PRNET) which is provided with at least one gateway (GATE 1 to GATE 3) to a further, first network (PUBNET), the switching facility (EX1 to EX4; WLPABX) including a call control (CC),
**characterized in that** the switching facility (EX1 to EX4; WLPABX) is provided with a translating device (KON2) and with a receiving device (REC) for receiving messages and for transferring the messages to the translating device (KON2), that the call control (CC) contains a device which is designed to recognize an incomplete number of a call request from the first network (PUBNET), and to transfer a message associated with the call request to the receiving device (REC), and that the translating device (KON2) is designed to generate a call number (N5) of a subscriber (B, B') by means of the message associated with the call request and to cause the call control (CC) to route the call to this call number (N5)

14. A terminal (El) for connection to a network (PUBNET), **characterized in that** the terminal (E1) is provided with a device which is designed to send, during the establishment of a connection to a subscriber (B; B'), a part of the call number (N4) assigned to the subscriber (B; B') to the network (PUBNET) with the aid of control instructions for a switching facility (SSP1, SSP2).

## Revendications

1. Procédé pour établir une liaison vers un abonné (B, B'), **caractérisé en ce que** lors de l'établissement de la liaison, une première partie (N2 ; N2') du numéro d'appel (N4) affecté à l'abonné (B ; B') est signalée d'une manière prévue pour la signalisation d'informations de numérotation, et une seconde partie (N3 ; N3') du numéro d'appel (N4) affecté à l'abonné (B, B') est transmise, moyennant des instructions de commande pour un dispositif central de commutation (SSP1, SSP2), d'un premier réseau (PUBNET) à un second réseau (PRNET).

2. Procédé selon la revendication 1, **caractérisé en ce qu'**un abonné du premier réseau signale la première partie (N2 ; N2') du numéro d'appel (N4) de la manière prévue pour la signalisation d'informations de numérotation, ce qui produit la demande d'établissement d'une liaison vers un central de commutation (EX1 à EX4 ; WLPABX) du second réseau (PRNET), **en ce qu'**un service envoie l'autre, la seconde partie (N3 ; N3') du numéro d'appel (N4), moyennant des instructions de commande pour un dispositif central de commutation (SSP1, SSP2), à ce central de commutation (EX1 à EX4 ; WLPABX), et **en ce que** le central de commutation (EX1 à EX4 ; WLPABX) reçoit cette seconde partie (N3 ; N3') du numéro, d'appel (N4), la traite et demande la signalisation pour la poursuite de l'établissement de la liaison vers l'abonné (B ; B').

3. Procédé selon la revendication 1, **caractérisé en ce qu'**une demande d'établissement d'une liaison vers l'abonné (B ; B') est tout d'abord dirigée vers un service du premier réseau (PUBNET), qui élabore alors un numéro d'appel (N4) affecté à l'abonné, et effectue la signalisation pour le transfert de l'appel à l'abonné (B ; B'), **en ce que** le service signale la première partie (N2; N2') du numéro d'appel (N4) de la manière prévue pour la signalisation d'informations de numérotation dans le premier réseau (PUBNET), ce qui produit la demande d'établissement d'une liaison vers un central de commutation (EX1 à EX4; WLPABX) du second réseau (PRNET), **en ce que** le service envoie l'autre, la seconde partie (N3 ; N3') du numéro d'appel (N4) d'une autre manière à ce central de commutation (EX1 à EX4 ; WLPABX), et **en ce que** le central de commutation (EX1 à EX4 ; WLPABX) reçoit cette seconde partie (N3 ; N3') du numéro d'appel (N4), la traite et demande la signalisation pour la poursuite de l'établissement de la liaison vers l'abonné (B ; B').

4. Procédé selon la revendication 2 ou la revendication 3, **caractérisé en ce qu'**en ce qui concerne l'abonné (B ; B'), il s'agit d'un abonné du second réseau (PRNET).

5. Procédé selon la revendication 2 ou la revendication 3, **caractérisé en ce que** le premier réseau (PUBNET) est formé par un réseau public, et le second réseau (PRNET) est formé par un réseau privé.

6. Procédé selon la revendication 2 ou la revendication 3, **caractérisé en ce que** la première partie (N2 ; N2') du numéro d'appel (N4) définit une connexion de transition de réseau (GATE 1 à GATE 3) vers le second réseau (PRNET), et la seconde partie (N3, N3') du numéro d'appel (N4) définit l'abonné (B ; B') à l'intérieur du second réseau (PRNET).

7. Procédé selon la revendication 2 ou la revendication 3, **caractérisé en ce que** la seconde partie (N3 ; N3') du numéro d'appel (N4) en commun avec une partie de la première partie (N2 ; N2') du numéro d'appel (N4) définit l'abonné (B ; B') à l'intérieur du second réseau (PRNET).

8. Procédé selon la revendication 3, **caractérisé en ce que** le service décide tout d'abord de l'une de plusieurs connexions de transition de réseau (GATE 1 à GATE 3) vers le second réseau (PRNET), et élabore ensuite le numéro d'appel (N4) en fonction de cette connexion de transition de réseau (GATE 1 à GATE 3).

9. Procédé selon la revendication 2 ou la revendication 3, **caractérisé en ce que** la seconde partie du numéro d'appel (N3 ; N3') est émise ou envoyée par l'intermédiaire d'un canal utile.

10. Procédé selon la revendication 2 ou la revendication 3, **caractérisé en ce que** dans le premier réseau (PUBNET) et le second réseau (PRNET), on utilise des procédés de signalisation ISDN, et **en ce que** la seconde partie (N3 ; N3') du numéro d'appel (N4) est importée dans la demande d'appel à l'endroit prévu pour la sous-adresse ISDN.

11. Procédé selon la revendication 3, **caractérisé en ce que** le service demande à un abonné appelant (A), de lui envoyer ou émettre des informations supplémentaires concernant l'abonné appelé (B ; B').

12. Calculateur de services (SCP) pour le branchement à un premier réseau (PUBNET), qui est relié à au moins un autre, le second réseau (PRNET), par l'intermédiaire d'au moins une connexion de transition de réseau (GATE 1 à GATE 3), avec une interface pour la communication avec au moins un dispositif central de commutation (SSP1, SSP2 ; WLPABX) du premier réseau (PUBNET), **caractérisé en ce que** le calculateur de services (SCP) est doté d'un dispositif de traduction ou de conversion (KON1), d'un dispositif de signalisation (SIG) et d'un dispositif d'émission (SEND), **en ce que** le dispositif de traduction (KON1) est doté d'un dispositif (CONTR) destiné à engendrer un numéro d'appel d'un abonné (B ; B') à partir de données qui sont contenues dans un appel dirigé vers le calculateur de services (SCP), et d'un dispositif (DIV) destiné à fractionner ce numéro d'appel (N4) en une première et une seconde partie (N2 ; N2' / N3 ; N3'), **en ce que** le dispositif de signalisation (SIG) est conçu de façon telle qu'il provoque la signalisation de la première partie (N2 ; N2') de ce numéro d'appel (N4) en tant qu'information de numérotation et le transfert de l'appel, et **en ce que** le dispositif d'émission (SEND) est conçu de façon telle qu'il émette la seconde partie (N3 ; N3') du numéro d'appel (N4), moyennant des instructions de commande pour un dispositif central de commutation (SSP1, SSP2), à un dispositif central de commutation (EX1 à EX4 ; WLPABX).

13. Dispositif central de commutation (EX1 à EX4 ; WLPABX) pour un second réseau (PRNET) ) qui est relié à au moins un autre, le premier réseau (PUBNET), par l'intermédiaire d'au moins une connexion de transition de réseau (GATE 1 à GATE 3), le dispositif central de commutation (EX1 à EX4 ; WLPABX) renfermant une commande de liaison (CC), **caractérisé en ce que** le dispositif central de commutation (EX1 à EX4 ; WLPABX) est doté d'un dispositif de traduction ou de conversion (KON2) et d'un dispositif de réception (REC) destiné à recevoir et transférer des informations au dispositif de traduction ou de conversion (KON2), **en ce que** la commande de liaison (CC) renferme un dispositif qui est conçu de façon telle, qu'il reconnaisse un numéro d'appel incomplet d'une demande d'appel en provenance du premier réseau (PUBNET) et transfère une information associée à la demande d'appel au dispositif de réception (REC), et **en ce que** le dispositif de traduction ou de conversion (KON2) est conçu de façon telle, qu'au moyen de l'information associée à la demande d'appel, il élabore un numéro d'appel (N5) d'un abonné (B, B'), et enjoint à la commande de liaison (CC) de transférer l'appel à ce numéro d'appel (N5).

14. Terminal (E1) destiné au branchement à un réseau (PUBNET), **caractérisé en ce que** le terminal (E1) est pourvu d'un dispositif qui est conçu de façon telle que lors de l'établissement d'une liaison vers un abonné (B ; B'), il émette une partie du numéro d'appel (N4) associé à l'abonné (B ; B') vers le réseau (PUBNET), moyennant des instructions de commande pour un dispositif central de commutation (SSP1, SSP2).
